# EUROPEAN PATENT SPECIFICATION

(11) **EP 0 986 954 B1**
(45) Date of publication and mention of the grant of the patent: **22.01.2003**
(21) Application number: 99118207.2
(22) Date of filing: 13.09.1999
(51) Int. Cl.: A01M 7/00

(54) **Agriculture/Viticulture sprayer**
Spritzeinrichtung für Landwirtschaft und/oder Weinbau
Pulvérisateur pour l'agriculture et/ou la viticulture

(30) Priority: 14.09.1998 AU PP586698
(43) Date of publication of application: 22.03.2000
(73) Proprietor: Baek, Bent, West Croydon, S.A. 5008 (AU)
(72) Inventor: Baek, Bent, West Croydon, S.A. 5008 (AU)
(74) Representative: Maiwald, Walter, Dr. Dipl.-Chem.

(56) References cited:
- EP-A- 0 704 157
- WO-A-97/04879
- US-A- 4 893 755

## Description

This invention relates to improvements in and relating to machines for spraying agricultural chemicals on rows of vineyard and orchard plants, trees and vines.

For a long time spraying agricultural chemicals have been applied by an air blast sprayer to spray away from a trailer carrying an air blast sprayer to spray chemicals toward a vine or tree by using large volume of high pressure air. Most conventional sprayers can only cover one row at a time and are not suited to sloping ground or terraced land due to the limited control over where the water/chemical spray is targeted, and this is the particular the case when spraying vine rows growing on terraced land.

Keathley (US 4,893,755) describes a wheeled arcuate canopy open at the bottom providing a rounded arcuate interior wall and a spacing at the open bottom related to the width of one or more conventional rows of crops of the like. The apparatus according to Keathley is rigid in construction and is not suited to sloping ground or terraced land.

In Australia Patent No.690473 there is described a spraying machine which includes at least a pair of curved arms carrying a plurality of fan spray heads which are directed to the canopy of the tree or vine, to direct the airborne spray material into the canopy in upwardly and downwardly directed directions simultaneously from both sides of the canopy.

It is an object of the invention to provide a spraying machine which is more compact and thus can be manoeuvred in small areas and which also is adaptable to spray canopies of rows which are of different heights.

In the following description this invention is particularly related to the spraying of rows of vines, but it is to be realised that the invention is not to be limited thereto, but can easily be applied to other horticultural and agricultural plantations.

The spraying machine according to the invention is described by the independent claim.

Some specific embodiments of the spraying machine of the present invention are described in the dependent claims.

According to the invention there is provided a vehicle having mounted thereon a pair of side arms rotatable about a mast on the vehicle, each side arm carrying a pair of curved arms on which are mounted spray heads to spray a respective row, for example vines, the side arms being rotatable about a mast from a transport position behind the vehicle to an operating position in which the arms extend backwards and sideways from the vehicle.

In a preferred form of the invention a spray head may be added to the centre of the curved arms to spray generally downwardly to achieve additional coverage and penetration of the vine canopy.

In a further form of the invention the vertical height of the side arms can be adjusted to provide for vines planted on terraced land. This may be accomplished in accordance with the present invention with the use of either one or a combination of the following hydraulic actuators (synchronous or independent), cable and winch or turnbuckle, or variable pin joints.

### Brief description of the drawings

In order to more fully describe the invention reference will now be made to the accompanying drawings in which:-
Figure 1. is a side view of one form of the invention with the arms in the transport position, only the curved arms on the near side being shown,
Figure 2. is a rear view showing the arms in the transport position,
Figure 3. shows the arms on one side of the vehicle,
Figure 3(a). is a view showing the arms in the spread condition.
Figure 4. is a view along the lines of 4-4 of Figure 1. showing the position of the arms in the folded position,
Figure 4(a). shows the arms on the opened position,
Figure 4(b). shows a side view of the upper end of the mast,
Figure 5. shows a top view in the transport position,
Figure 6. shows a plan view of the machine with the arms in the operating position,
Figure 7. shows a rear view of the arms in the operating position,
Figure 7(a). shows a rear view of the invention when operating on terraced or sloping land which sprays two vines rows at different canopy height "Y",
Figure 8. shows the invention attached to a tractor or the like to spray one row of vines,
Figure 8(a). shows a rear view of the embodiment of Figure 8,
Figure 9. shows a plan view of the invention to simultaneously spray three rows of vines,
Figure 9(a). is a rear view thereof, and
Figure 10. is a view of a self propelled vehicle to straddle the centre row and also spray the adjacent rows on each side thereof.

### Description of the preferred embodiment

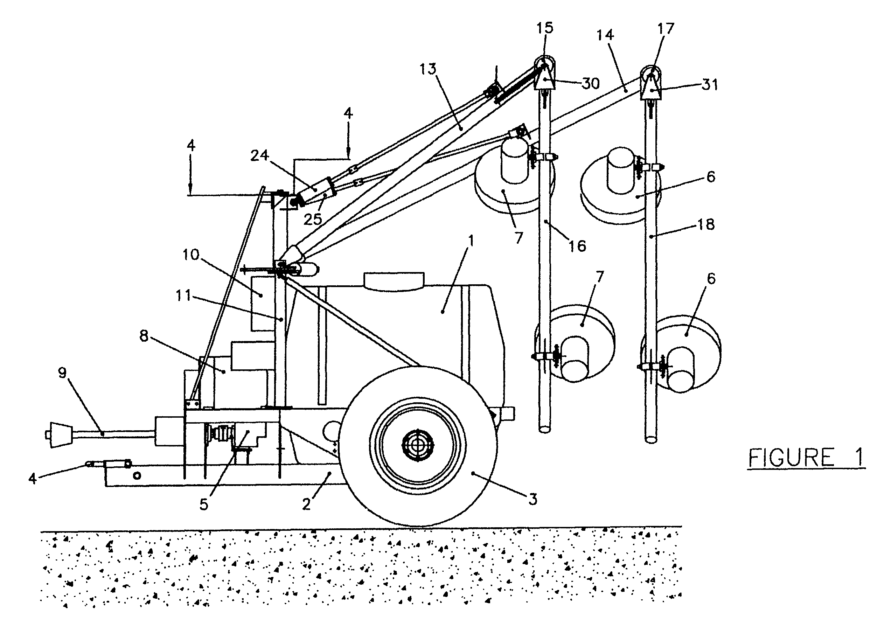

Referring firstly to Figure 1 to 7(a) of the drawings, there is shown a sprayer including a tank 1 mounted on a trailer 2 having wheels 3 and a drawbar 4. A pump 5 supplies spray material "SM" from the tank 1 to the fan spray heads 6 and 7 by spray lines (not shown).

The fan spray heads include fans driven by electric or hydraulic motors supplied with electrical or hydraulic power from an alternator or hydraulic pump 8 driven by power take off shaft 9 through a control system 10.

To the trailer are mounted two masts 11 and 12 on which are rotatably mounted arms 13 and 14, the arm 14 being longer than the arm 13. To the end of arm 13 there is suspended by a hinge point 15 a pair of curved arms 16 carrying the fan spray heads 7, and to the end of arm 14 there is suspended by hinge point 17 a pair of curved arms 18 carrying the fan spray heads 6.

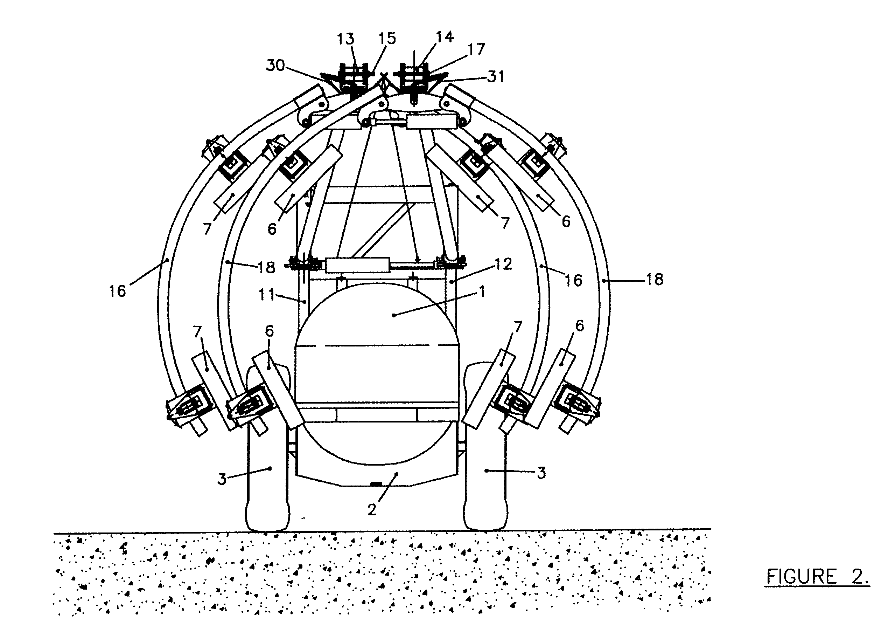

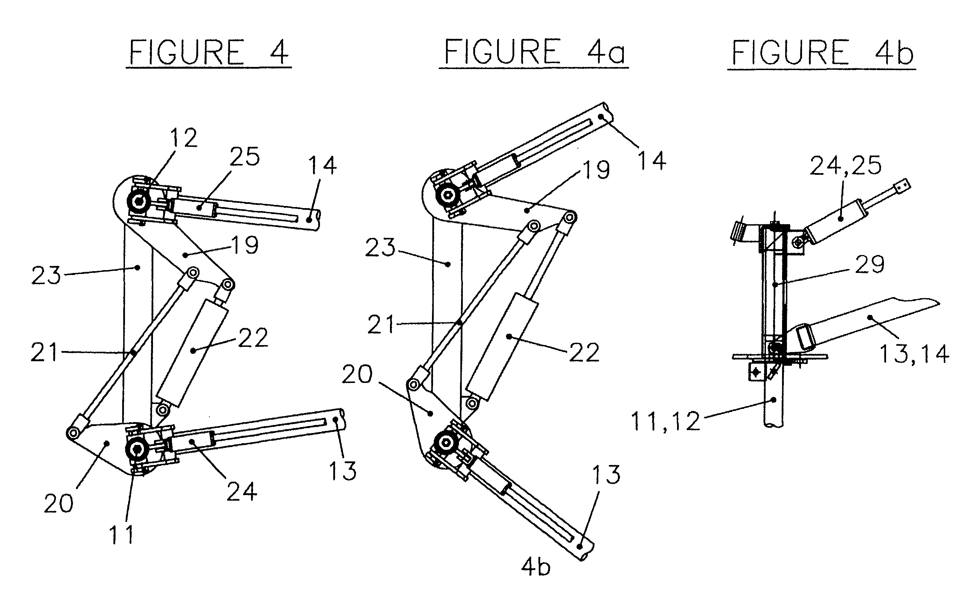

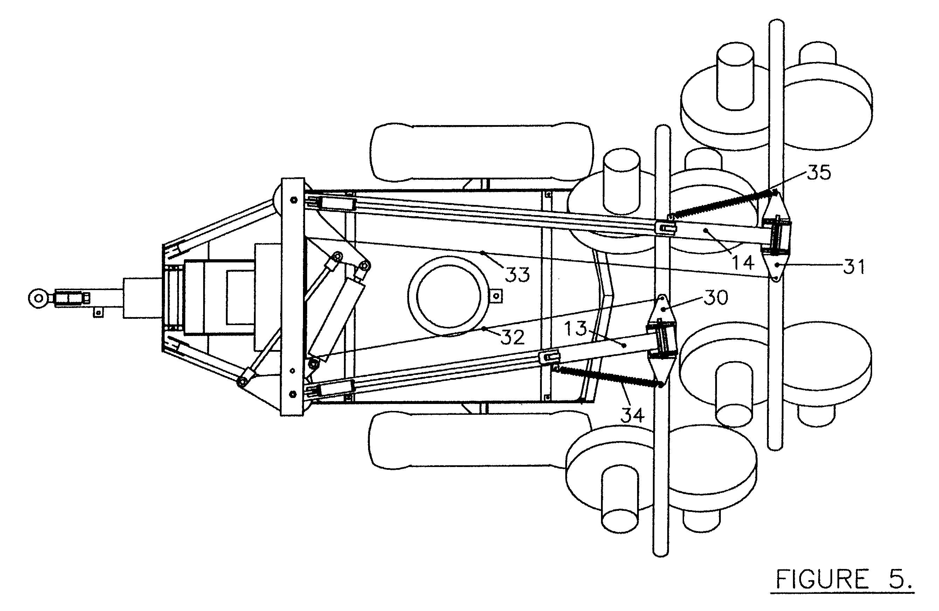

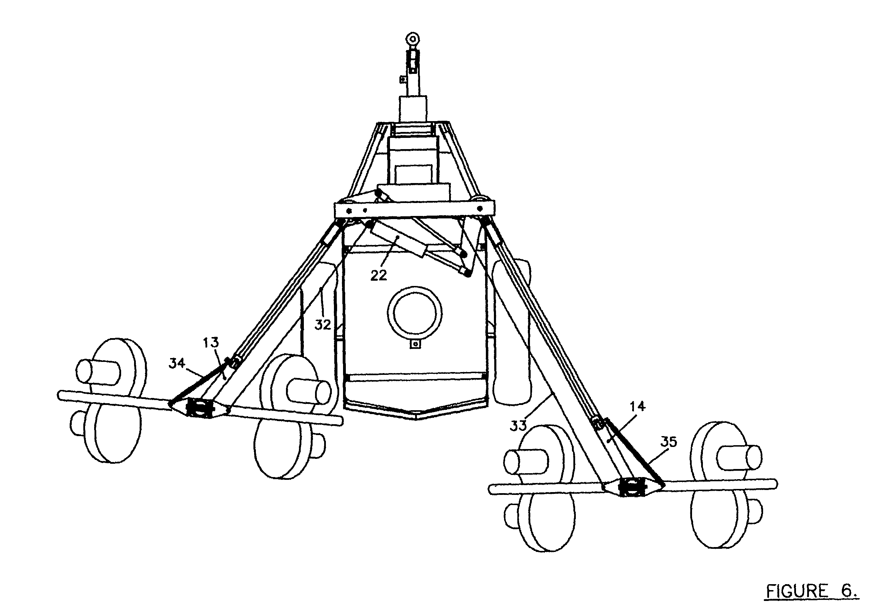

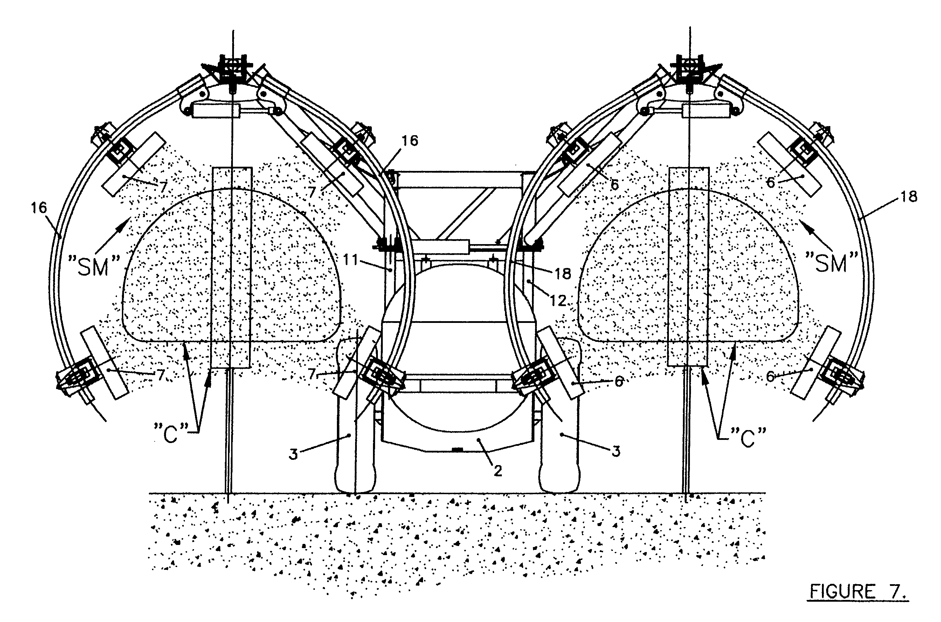

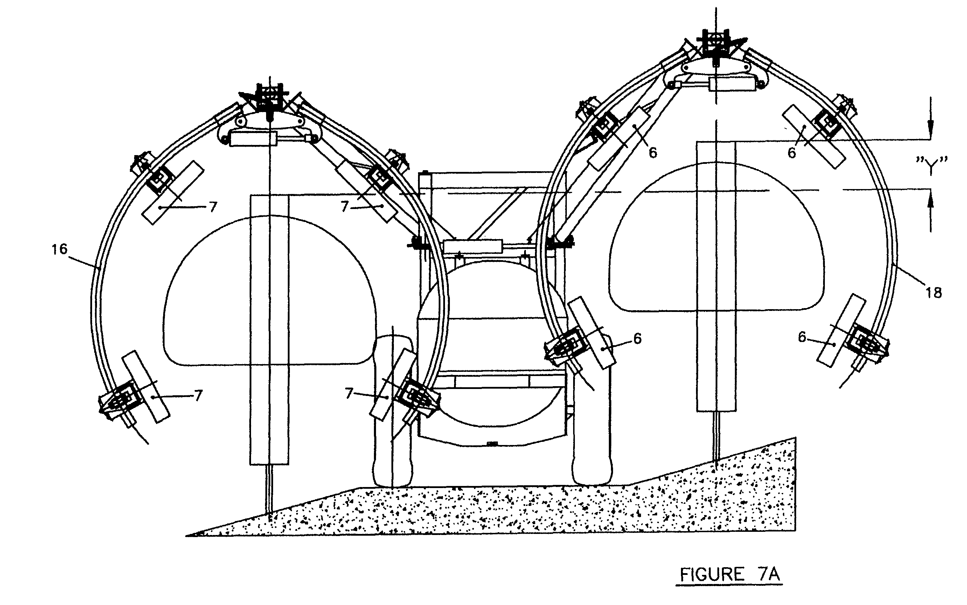

The arms 13 and 14 carrying the curved arms can be moved from a transport position as shown in Figure 2 and 5 to an operating position as shown in Figures 6 and 7 by the linkage as shown in Figures 4 and 4(a). To arm 14 which is rotatable about mast 12 there is attached a bracket 19 and to the arm 13 there is attached a bracket 20 which brackets (19, 20) are interconnected by a link 21, to the bracket 19 there is attached a hydraulic cylinder 22, the other end of the cylinder being pivotly connected to a frame portion 23 interconnecting the two masts 11 and 12.

Thus it will be seen that by actuation of the hydraulic cylinder 22, the arms 13 and14 will move in opposite rotational directions due to the interconnecting link 21 moving the arms from the transport position to the operating position and vice versa.

A mechanism is also provided to raise and lower each arm 13 and 14 to vertically adjust the curved arms 16 and 18, and hence the fan spray units, depending upon the height of the vine canopy "C" and also whether the vines are terraced as shown in Figure 7(a), where the machine sprays two vines rows at different canopy height "Y". An adjustable link, such as hydraulic cylinders 24 and 25, are pivoted to the upper end of the masts 11 and 12 and connected to the respective arms 13 and 14, whereby the height of each of the curved arms 16 and 18 can be individually adjusted.

Figure 4(b) shows a detail of the upper end of a mast 11, 12 the arms 13, 14 and hydraulic cylinders 24, 25 being attached to a rotatable sleeve 29 fitted to each of the masts 11 and 12.

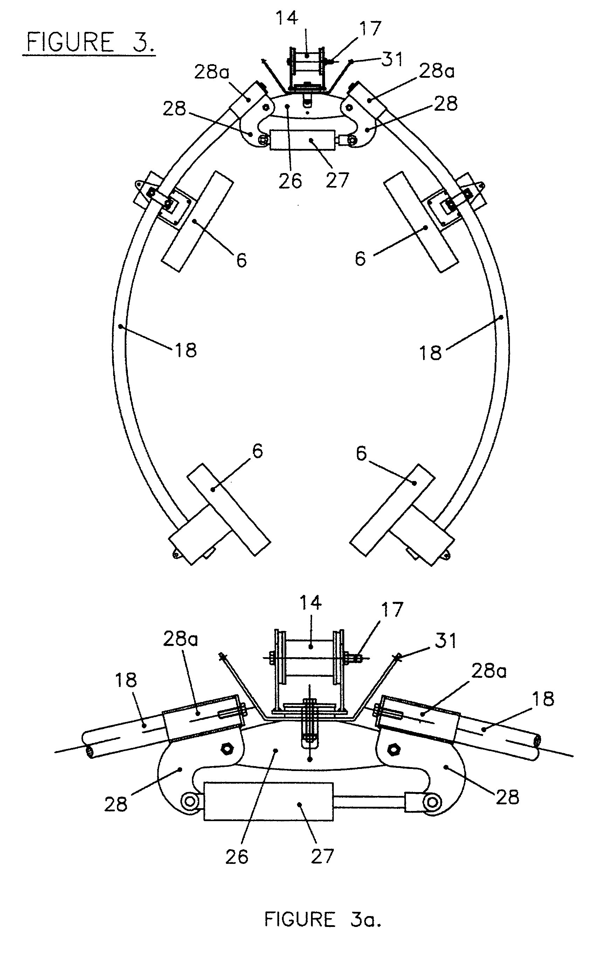

Furthermore by referring to Figure 3, where only one pair of the curved arms is shown, e.g. arms 18, the spacing between the arms can be adjusted to accommodate for various widths of canopy of the vines "C". Each of the arms 18 are pivoted to a bracket 26 being attached to a sleeve 28a such that, upon collision with an object, the curved arms 18 can swivel upwardly and rearwardly, a hydraulic cylinder 27 acting between brackets 28 on the respective arms thus controlling the spacing between of the curved arms 18, Figure 3(a) showing the arms 18 in a spread condition.

Each of the curved arms 16 and 18 are connected by the hinge points 15 and 17 to the respective arms 13 and 14, which hinge points include a hinge about a substantially vertical axis. This is necessary to provide a means whereby the arms are maintained in a position normal to the vine row being sprayed. If this were not so the angle of the spray heads relative to the vine would vary depending on the distance of the curved arms from the respective mast, which distance varies depending upon the distance of the vine from the vehicle. Thus the arms 16 and 18 are provided with adjuster horns 30 and 31, and to these are attached cables 32 and 33 anchored at their other ends to the frame of the masts. On the opposite side of the respective horns tension springs 34 and 35 provide tension between the respective horns 30 and 31 and the respective arms 13 and 14. Thus it will be seen that as the arms 13 and 14 rotate about the respective masts, the cables and springs will move each pair of curved arms so that the spray heads are generally normal to the canopy of the vine.

As note above the arms 13 and 14 are of differing lengths, and this is provided that when the arms are rotated to the transport position the curved arms and spray heads are positioned one behind the other as shown in Figures 1, 2, 5 and 6.

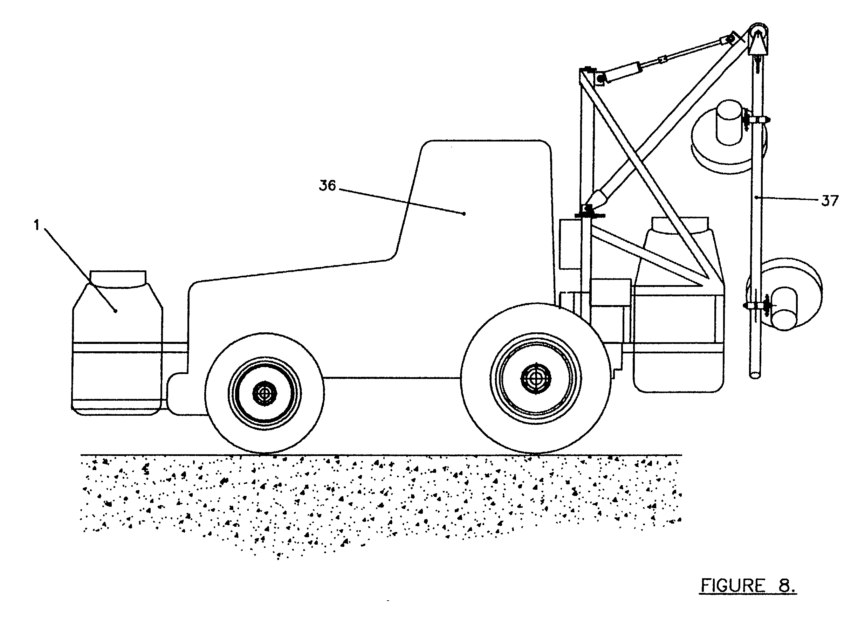

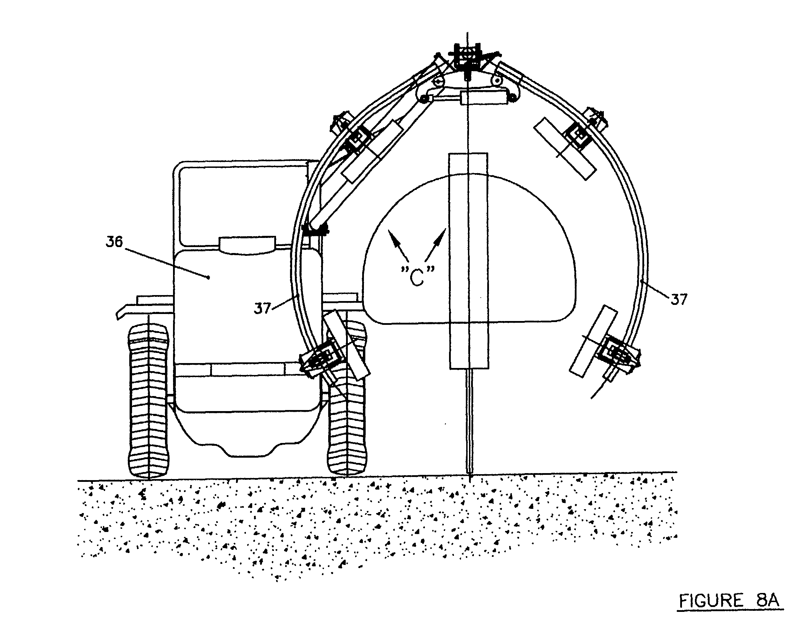

The invention above has been described as being attached to a trailed vehicle, and Figure 8 and 8(a) show the sprayer mounted on the lift arms of a tractor 36. While the drawings show the curved arms 37 being attached to one side of the tractor, it is to be realised that a further pair of curved arms can be fitted to spray another vine row on the other side of the tractor.

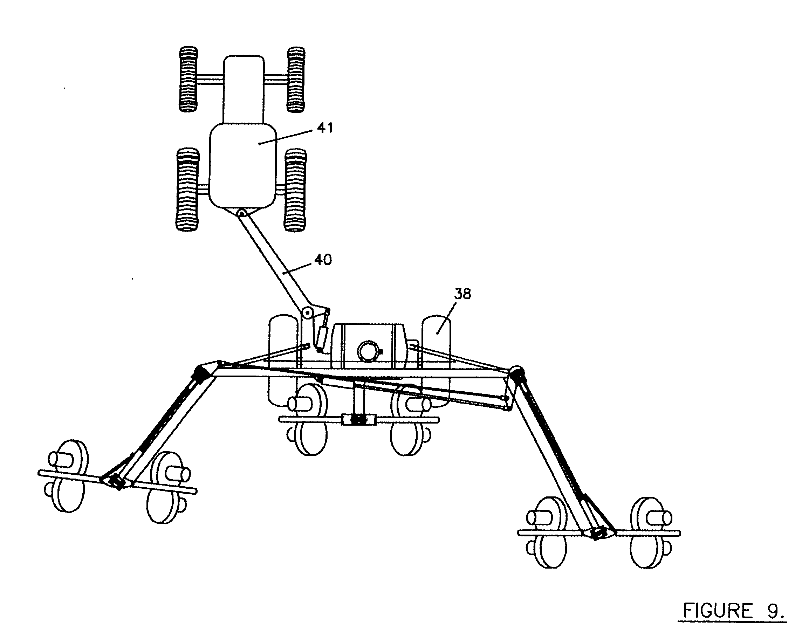

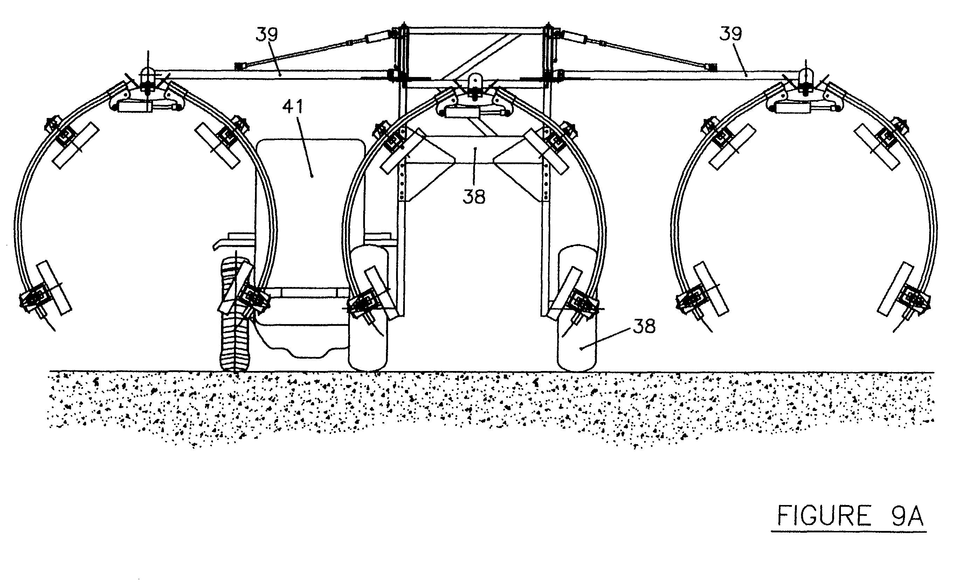

A further embodiment is shown in Figure 9 and 9(a) in which the trailer 38 is constructed to straddle over the centre row of vines and thus sprays that row and has outrigger arms 39 to spray the adjacent rows, thus spraying three rows of vines at the one time. The trailer has an offset drawbar 40 so that it is drawn by a tractor 41 passing between two rows.

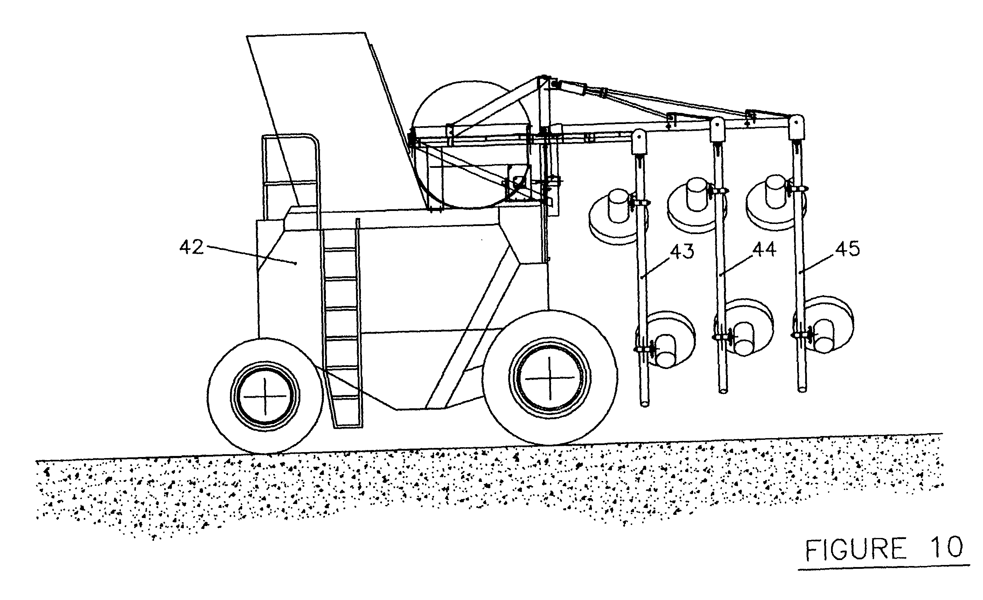

Similarly Figure 10 shows a self propelled vehicle 42 which straddles over the centre row of vines and thus sprays that row and also the adjacent rows by pairs of curved arms 43, 44 and 45 respectively.

It will be seen that the invention provides a sprayer which, while particularly described in connection with spraying of vine rows, may also be used for spraying of trees. In many vineyards there is a minimum headland or distance between the end of the row of vines and an obstruction such as a fence. However with the sprayer of the present invention when the end of the row is reached, the arms are folded to the transport position thus permitting the sprayer to be manoeuvred into position for the next pass along the rows of vines.

The invention provides a mechanism where by the arms and curved arms can be adjusted for canopy height and also to adjust the spray heads angle to accommodate for sloping ground or even terraced ground.

The main advantages of the inventive spraying machine are a maximum in flexibility, which in the operating position allows for individually adjustment of the spraying system to the breadth and height of the vines and trees to be sprayed, and in the transport position provides a system compact enough for being manoeuvred in small areas. Furthermore the spraying system according to the present invention is highly efficient as it creates a contained spray region around the whole canopy while producing only very little wastage of the spray material.

## Claims

1. A spraying machine adapted to spray rows of vines or trees, comprising at least one pair of curved arms (16, 18) carrying a plurality of fan spray heads (6) and mounted on a vehicle, **characterised in** the pair of curved arms being carried by a side arm (13, 14) which is rotatable about a mast (11, 12) from a transport position to an operating position extending backwards and sideways from the vehicle and further comprising means to adjust the vertical height of the at least one pair of curved arms to provide for vines or trees of different height and/or planted on sloping ground or terraced land.

2. A spraying machine as defined in claim 1, adapted to spray rows of vines or trees, said machine including at least one pair of curved arms (18) each carrying a plurality of fan spray heads (6) to direct spray material ("SM") into a canopy ("C") to be sprayed, said pair of curved arms (18) being mounted on the end of a radial arm (14) rotatable about a mast (12) on the machine, means to rotate (22) the radial arm (14), first adjustable link means (24, 25) between the mast and the radial arms (14) to raise and lower the pair of curved arms (18), and second adjustable link means (27) to vary the spacing between the curved arms (18) of each pair (16, 18) wherein the radial arm (14) is positioned between an operating position and a transport position behind the machine.

3. A spraying machine as defined in any one of claims 1-2, wherein the machine is a trailed vehicle, there being two pairs of curved arms (16, 18), one pair on each side of the vehicle, and wherein one radial arm (14) is of greater length than the other radial arm (13) so that when the arms are rotated into the transport position one is positioned rearwardly of the other for transport and ease of manoeuvring in restricted areas.

4. A spraying machine as defined in any one of claims 1-3, wherein each pair of curved arms (16, 18) are mounted on a pivot (15, 17) at the end of the radial arms (13, 14) whereby each of curved arms (16, 18) are maintained to position the fan spray heads (6, 7) generally normal to the canopy ("C") as the radial arm (13, 14) rotates about its mast.

5. A spraying machine as defined in claim 4, wherein the curved arms (16, 17) adjacent the pivots are connected at one side to a tension member (32, 33) attached to a fixture(23) on the machine and a spring (34, 35) on the other side to maintain the tension in the tension member (32, 33), the tension member (32, 33) thus maintaining the orientation of the curved arms (16,18) relative to the canopy ("C").

6. A spraying machine according to any one of claims 1-5, being a trailed vehicle having two pairs of curved arms (16,17) to spray a vine or tree row on each side of the trailed vehicle.

7. A spraying machine as defined in any one of claims 1-6, wherein the machine is a trailed vehicle straddling over one row of vines, the trailed vehicle carrying three pairs of curved arms, one pair spraying the canopy being straddled and the other pairs spraying the canopies on either side of the vehicle.

8. A spraying machine as defined in any one of claims 1 or 2 and 4-5, wherein the machine is a self propelled machine straddling a canopy row, and carrying either one, two or three pairs of curved arms.

## Patentansprüche

1. Sprühmaschine, die dazu ausgelegt ist, Weinstock- oder Baumreihen zu besprühen, die mindestens ein Paar gekrümmter Arme (16, 18) umfasst, die mehrere Gebläsesprühköpfe (6) tragen und an einem Fahrzeug befestigt sind, **dadurch gekennzeichnet, dass** das Paar gekrümmter Arme von einem Seitenarm (13, 14) gehaltert ist, der um einen Mast (11, 12) aus einer Transportposition in eine sich vom Fahrzeug nach hinten und seitwärts erstreckende Betriebsposition drehbeweglich ist, und darüber hinaus Einrichtungen umfasst, um die vertikale Höhe des mindestens einen Paars gekrümmter Arme einzustellen, um Weinstöcken oder Bäumen Rechnung zu tragen, die unterschiedlich hoch sind und/oder auf abschüssigem Grund oder terrassenförmig abgestuftem Land angepflanzt sind.

2. Sprühmaschine nach Anspruch 1, die dazu ausgelegt ist, Weinstock- oder Baumreihen zu besprühen, wobei die Maschine mindestens ein Paar gekrümmter Arme (18) umfasst, wovon jeder mehrere Gebläsesprühköpfe (6) trägt, um Sprühmaterial ("SM") in ein zu besprühendes Blätterdach ("C") zu leiten, wobei das Paar gekrümmter Arme (18) am Ende eines um einen Masten (12) auf der Maschine drehbeweglichen radialen Arms (14) befestigt ist, Einrichtungen (22), um den radialen Arm (14) zu drehen, erste einstellbare Verbindungseinrichtungen (24, 25) zwischen dem Mast und den radialen Armen (13, 14), um das Paar gekrümmter Arme (18) zu heben und zu senken, und zweite einstellbare Verbindungseinrichtungen (27), um den Abstand zwischen den gekrümmten Armen (18) jedes Paars (16, 18) zu verändern, bei der sich der radiale Arm (14) zwischen einer Betriebsposition und einer Transportposition hinter der Maschine befindet.

3. Sprühmaschine nach einem der Ansprüche 1 und 2, bei der die Maschine ein Anhänger ist, bei dem zwei Paare gekrümmter Arme (16, 18) vorhanden sind, ein Paar jeweils auf einer Fahrzeugseite, und bei der ein radialer Arm (14) länger ist als der andere radiale Arm (13), so dass, wenn die Arme in die Transportposition gedreht werden, für den Transport und eine leichtere Fahrzeugführung in eingeschränkten Bereichen einer hinter dem anderen angeordnet ist.

4. Sprühmaschine nach einem der Ansprüche 1 bis 3, bei der jedes Paar gekrümmter Arme (16, 18) an einem Drehzapfen (15, 17) am Ende der radialen Arme (13, 14) befestigt ist, wobei jeder der gekrümmten Arme (16, 18) so gehaltert ist, dass er die Gebläsesprühköpfe (6, 7) im allgemeinen senkrecht zum Blätterdach ("C") positioniert, wenn sich der radiale Arm (13, 14) um seinen Mast dreht.

5. Sprühmaschine nach Anspruch 4, bei der die gekrümmten Arme (16, 17) angrenzend an die Drehzapfen an einer Seite an ein Spannelement (32, 33) angeschlossen sind, das an einer Befestigungseinrichtung (23) an der Maschine und an einer Feder (34, 35) auf der anderen Seite befestigt ist, um die Spannung im Spannelement (32, 33) aufrechtzuerhalten, wobei das Spannelement (32, 33) auf diese Weise die Ausrichtung der gekrümmten Arme (16,18) bezüglich des Blätterdachs ("C") aufrechterhält.

6. Sprühmaschine nach einem der Ansprüche 1 bis 5, die ein Anhänger mit zwei Paaren gekrümmter Arme (16, 17) ist, um eine Weinstock- oder Baumreihe auf jeder Seite des Anhängers zu besprühen.

7. Sprühmaschine nach einem der Ansprüche 1 bis 6, bei der die Maschine ein Anhänger ist, der portalartig über eine Weinstockreihe hinwegfährt, wobei der Anhänger drei Paare gekrümmter Arme trägt, wobei ein Paar das Blätterdach besprüht, über das portalartig hinweggefahren wird, und die anderen Paare die Blätterdächer beidseits des Fahrzeugs besprühen.

8. Sprühmaschine nach einem der Ansprüche 1 oder 2 und 4 bis 5, bei der die Maschine eine selbstangetriebene Maschine ist, die portalartig über eine Blätterdachreihe hinwegfährt und entweder ein, zwei oder drei Paare gekrümmter Arme trägt.

## Revendications

1. Machine à pulvériser, adaptée à pulvériser des rangées de vignes ou d'arbres, comprenant au moins une paire de bras courbés (16, 18) portant une pluralité de têtes souffleuses de pulvérisation (6) et montée sur un véhicule, **caractérisée en ce que** ladite paire de bras courbés est portée par un bras latéral (13, 14) qui peut pivoter autour d'un mât (11, 12) d'une position de transport en une position de fonctionnement s'étendant vers l'arrière et latéralement du véhicule, et comprenant en outre des moyens pour régler la hauteur verticale de ladite paire, au moins, de bras courbés pour s'adapter à des vignes ou des arbres de différentes hauteurs et/ou plantés sur un terrain en pente ou des champs terrassés.

2. Machine à pulvériser selon la revendication 1, adaptée à pulvériser des rangées de vignes ou d'arbres, ladite machine comprenant au moins une paire de bras courbés (18) portant chacun une pluralité de têtes souffleuses de pulvérisation (6) pour diriger un matériau ("SM") dans une feuillage ("C") à pulvériser, ladite paire de bras courbés (18) étant montée à l'extrémité d'un bras radial (14) pouvant pivoter autour d'un mât (12) sur la machine, des moyens pour faire pivoter (22) le bras radial (14), des premiers moyens de liaison réglables (24, 25) entre ledit mât et les bras radiaux (13, 14) pour lever ou abaisser la paire de bras courbés (18) et des deuxièmes moyens de liaison réglables (27) pour modifier l'espacement entre les bras courbés (18) de chaque paire (16, 18), dans laquelle le bras radial (14) est positionné entre une position de fonctionnement et en une position de transport derrière la machine.

3. Machine à pulvériser selon l'une quelconque des revendications 1 ou 2, dans laquelle ladite machine est un véhicule remorqué, deux paires de bras courbés (16, 18) existant, une paire sur chaque côté du véhicule, et dans laquelle un bras radial (14) et d'une longueur supérieure à celle de l'autre bras radial (13), si bien que lorsque les bras sont tournés en position de transport l'un est positionné derrière l'autre pour le transport et pour une manoeuvre aisée dans des espaces restreints.

4. Machine à pulvériser selon l'une quelconque des revendications 1 à 3, dans laquelle chaque paire de bras courbés (16, 18) est montée sur un pivot (15, 17) à l'extrémité des bras radiaux (13, 14), chacun des bras courbés (16, 18) étant maintenu pour positionner les têtes souffleuses de pulvérisation (6, 7) généralement perpendiculairement au feuillage ("C") lorsque le bras radial (13, 14) pivote autour de son dit mât.

5. Machine à pulvériser selon la revendication 4, dans laquelle les bras courbés (16, 187) adjacents aux pivots sont connectés à une extrémité à un membre de tension (32, 33) attaché à une fixation (23) sur la machine et un ressort (34, 35) de l'autre côté pour maintenir la tension du membre de tension (32, 33), le membre de tension (32, 33) maintenant ainsi l'orientation des bras courbés (16, 18) par rapport au feuillage ("C").

6. Machine à pulvériser selon l'une quelconque des revendications 1 à 5, en tant que véhicule remorqué ayant deux paires de bras courbés (16, 187) pour pulvériser une rangée de vignes ou d'arbres de chaque côté du véhicule remorqué.

7. Machine à pulvériser selon l'une quelconque des revendications 1 à 6, dans laquelle la machine est un véhicule remorqué enjambant une rangée de vignes, le véhicule remorqué ayant trois paires desdits bras courbés, une paire pulvérisant le feuillage enjambé et les autres paires pulvérisant les feuillages de chaque côté du véhicule.

8. Machine à pulvériser selon l'une quelconque des revendications 1 ou 2 et de 4 à 5, dans laquelle la machine est une machine automotrice enjambant une rangée de feuillage, portant une, deux ou trois paires desdits bras courbés.
